# EUROPÄISCHE PATENTSCHRIFT

(11) **EP 1 484 164 B1**
(45) Veröffentlichungstag und Bekanntmachung des Hinweises auf die Patenterteilung: **16.04.2008**
(21) Anmeldenummer: 04012954.6
(22) Anmeldetag: 02.06.2004
(51) Int. Cl.: B29C 70/36, B29C 70/84, B29C 65/54

(54) **Verfahren zum Verkleben von Bauteilen und insbesondere von Faserverbundbauteilen**
Method for glueing construction elements and in particular fibre reinforced elements
Procédé pour coller des éléments de construction, notamment des éléments renforcés par des fibres

(30) Priorität: 06.06.2003 DE 10325694
(43) Veröffentlichungstag der Anmeldung: 08.12.2004
(73) Patentinhaber: EADS Deutschland GmbH, 85521 Ottobrunn (DE)
(72) Erfinder: Bauer, Ernst-Joachim, 83043 Bad Aibling (DE)

(56) Entgegenhaltungen:
- EP-A- 1 216 816
- WO-A-02/45932
- WO-A-02/066235
- PATENT ABSTRACTS OF JAPAN Bd. 2000, Nr. 07, 29. September 2000 (2000-09-29) -& JP 2000 102982 A (TORAY IND INC), 11. April 2000 (2000-04-11)

## Beschreibung

Die Erfindung betrifft ein Verfahren zum Verkleben von Bauteilen und insbesondere von Faserverbundbauteilen.

Bei der Anwendung des erfindungsgemäßen Verfahrens können die bei diesem Verfahren verwendeten Faserverbundbauteile auch Halbzeuge zur Herstellung von Faserverbundbauteilen sein. Das durch das Verkleben der Faserverbundbauteile oder Halbzeuge entstehende Faserverbundbauteil bzw. Halbzeug kann auch ein Zwischenprodukt zur Herstellung von weiteren Bauteilen aus Faserverbundwerkstoff sein.

Aus dem Stand der Technik ist die Herstellung von Faserverbund- (FV-) Bauteilen aus übereinandergestapelten Schichten, die aus (Faser-)Halbzeugen, wie vorimprägnierte Harzschichten, den Prepregs, oder aus Textilien aus Verstärkungsfasern bekannt. Aus dem Stand der Technik ist weiterhin bekannt, dass Faserverbundbauteile (FV) aus Verstärkungsfasern bestehen, die entweder in Form von Textilien oder unidirektional ausgerichtet in einer Matrix eingebettet sind. Ihre Herstellung erfolgt entweder mit Hilfe von imprägnierten Faserhalbzeugen, sog. Prepregs, oder mit Verfahren, bei denen die Faserhalbzeuge in einer Werkzeugform mit Harz getränkt werden.

Aus dem deutschen Patent DE 100 13 409 C1 ist eine Vorrichtung bzw. ein Verfahren, im folgenden auch als "Vacuum-Assisted-Process" oder kurz als VAP-Verfahren bezeichnet, zur Herstellung von faserverstärkten Kunststoff-Bauteilen aus trockenen Faserverbund-Halbzeugen mittels eines Injektionsverfahrens zur Injektion von Matrix-Material mit einer Gas-durchlässigen und Matrixmaterial-undurchlässigen Membran, die zumindest einseitig um das Halbzeug herum angeordnet ist und einen ersten Raum bildet und in das Matrix-Material einführbar ist, mit einer an einer Oberfläche des.Halbzeugs angeordneten Fließhilfe, mit einem am ersten Raum anliegenden zweiten, gegenüber einem Werkzeug abgedichteten Raum, der von der Umgebung mittels einer gas- und Matrixmaterial-undurchlässigen Folie abgegrenzt ist, wobei bei Absaugen von Luft aus dem zweiten Raum, Matrix-Material aus dem Vorratsbehälter in den evakuierten ersten Raum gesaugt wird und die Fließhilfe eine Verteilung des Matrixmaterials über der dieser zugewandten Oberfläche des Halbzeugs und ein Eindringen desselben senkrecht in das Halbzeug bewirkt.

Bei diesem Verfahren wird das Matrix-Material mittels einer Fließhilfe über das Faserverbund-Halbzeug verteilt oder zum Faserverbund-Halbzeug transportiert und dringt von dort aus in das Halbzeug ein. Die Fließhilfe wird einseitig von der Gas-durchlässigen und Matrixmaterial-undurchlässigen Membran begrenzt. Bei dem Transport des Matrix-Materials in der dünnen Fließhilfe erfolgt eine Entgasung des Matrix-Materials. Die Entgasung erfolgt durch die an die Fließhilfe angrenzende Membran hindurch in die evakuierte zweite Kammer. Zur wirksamen Entgasung ist es erforderlich, dass das Matrix-Material zunächst eine hinreichend große Strecke durch die Fließhilfe laufen kann, bevor es in das Halbzeug eintritt.

Aus der US 6, 558,503 B1 ist ein Verfahren zur Herstellung eines Gelenks bekannt, bei dem zwei Komponenten relativ zueinander angeordnet werden und der zwischen diesem vorhandenen Zwischenraum mit flüssigem Mittel gefüllt wird.

Aus der EP 0 415 870 A2 ist eine Anordnung aus Vorformlingen bekannt, die zur Verwendung in einer Vorrichtung zur Herstellung von Kunststoffbauteilen vorgesehen ist.

Es sind aus dem Stand der Technik auch weitere Verfahren zur Herstellung von FV-Bauteilen, wie z.B. Harz-Injektionsverfahren, Harzfilm-Infusionsverfahren oder das Single-Line-Injection-Verfahren bekannt.

Bei aus dem allgemeinen Stand der Technik bekannten Verfahren zum Verkleben von Faserverbund-Bauteilen wird ein zwischen den zu verklebenden Bauteilen vorgesehener Spalt mit einem Kleber-Material gefüllt.

In der JP2000102982 ist ein Verfahren zum Verbinden zweier Faserverbundbauteile nach dem Oberbegriff des Patentanspruch 1 bekannt. Dabei wird in den Spalt zwischen den zwei zu verbindenden Bauteilen ein uniaxiales Fasermaterial eingebracht, das unter Einsatz einer Vakuumpumpe mit einem flüssigen Matrixmaterial infiltriert wird.

Üblicherweise führen geometrische Randbedingungen dazu, dass die zu verklebenden Fügeteile an den jeweiligen Fügeflächen eine hohe Maßhaltigkeit aufweisen müssen, d.h. mit engen Toleranzen gefertigt werden müssen. Diese Anforderung stößt, insbesondere bei der Verwendung von Faserverbundbauteilen als Fügeteile, auf fertigungstechnische Schwierigkeiten, die nur mit hohem technischen Aufwand bewältigt werden können.

Um die Reproduzierbarkeit der mechanischen Festigkeit einer Klebeverbindung gewährleisten zu können, ist der Faservolumengehalt von Bedeutung. Dies ist insbesondere dann problematisch, wenn kein konstantes Spaltmaß zwischen den beiden Fügeflächen der beiden Fügeteile vorhanden ist.

Es ist die Aufgabe der Erfindung, ein Verfahren zum Verkleben von Bauteilen und insbesondere von Faserverbundbauteilen bereitzustellen, mit denen die Reproduzierbarkeit der mechanischen Festigkeit bei möglichst geringem Fertigungsaufwand sichergestellt werden kann.

Diese Aufgabe wird mit den Merkmalen des Patentanspruchs 1 gelöst. Weitere Ausführungsformen sind in den auf diesen rückbezogenen Unteransprüchen angegeben.

Erfindungsgemäß ist ein Verfahren zum Verkleben von Bauteilen mit den Schritten vorgesehen:
- Anordnen eines ersten und eines zweiten Fügeteils aus Faserverbundmaterial auf einer Auflage, wobei an den Auflageflächen zwischen den Fügeteilen eine Zwischenschicht aus einem Faserverbund-Halbzeug angeordnet wird,
- Anordnen eines ersten Werkzeuges mit einem Matrixmaterial-Angusskanal an dem ersten und dem zweiten Fügeteil, so dass sich zwischen dem ersten und dem zweiten Fügeteil ein erster luftdichter Raum für die Zufuhr vom Matrixmaterial ausbildet,
- Anordnen eines zweiten Werkzeuges mit einem Absaugkanal an dem ersten und dem zweiten Fügeteil, so dass sich zwischen dem ersten und dem zweiten Fügeteil ein zweiter luftdichter Raum mit einer Öffnung zu dem Absaugkanal ausbildet, der mit einer Vakuumpumpe verbunden ist,
- Herstellung von Unterdruck im Bereich zwischen dem ersten und dem zweiten Fügeteil mittels der Vakuumpumpe,
- Zufuhr von Matrixmaterial zur Infiltration der Zwischenschicht in den ersten Raum über den Matrixmaterial-Angusskanal,
- Härtung der Zwischenschicht unter Anwendung von Druck und Temperatur

Das eingesetzte Faserverbund-Halbzeug ist ein Textil hoher Elastizität, ausgebildet als Gewebe, Multiaxialgelege, Gestick, Gewirke, Geflecht oder Strickware, das beim Einbringen in den Spalt zwischen dem ersten und zweiten Fügeteil einer Dehnung unterworfen wird, so dass es beim Zurückfedern den Raum ausfüllt, der durch die örtliche Spaltdicke festgelegt ist.

Bei dem erfindungsgemäßen Verfahren können dem Faserhalbzeug der Zwischenschicht Schmelzgarne beigemischt sein, die sich unter dem Einfluss von Temperatur im Matrixmaterial auflösen, um als Weichmacher zu wirken. Als Matrixmaterial können duroplastische Harze oder keramische Matrixmaterialien verwendet werden. Die Werkzeuge können mittels Dichtmitteln gegenüber den Fügeteilen abgedichtet sein. Die Werkzeuge können in Bezug auf die Position der Fügeteile gegenüberliegenden Seiten angeordnet sein. Die Werkzeuge können weiterhin als ein Teil gebildet sein. Zusätzlich kann eine luftdurchlässige und Matrixmaterial-undurchlässige Membranfolie zwischen der Zwischenschicht und der Öffnung zum Absaugkanal angeordnet sein.

Die erfindungsgemäße Lösung kann im Zusammenhang mit allen Techniken oder Technologien zur Fertigung von Faserverbundbauteilen angewendet werden, und insbesondere im Zusammenhang mit Techniken wie Harzinjektions-Verfahren unter Anwendung von Unterdruck mit flüssigem Harz oder Harzfilmen oder vorimprägnierten Gelegen zur Fertigung von Faserverbund-Bauteilen.

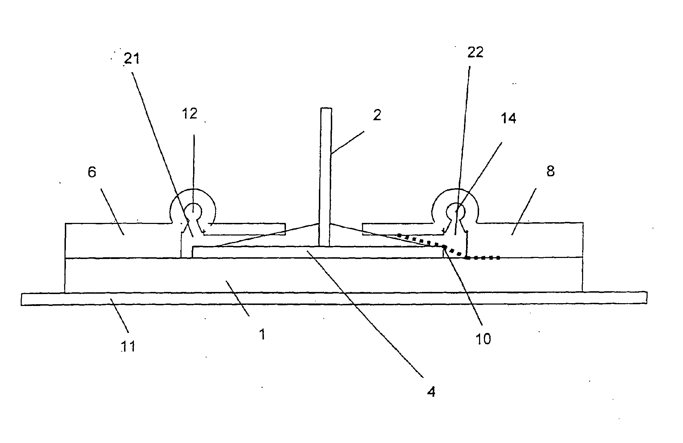

Die Wirkungsweise der Erfindung wird im Folgenden an Hand der beiliegenden Figur beschrieben. Diese zeigt:
- einen Schnitt durch eine erfindungsgemäße Anordnung der zu verklebenden Fügeteile mit der erfindungsgemäß verwendeten Zwischenschicht sowie mit den erfindungsgemäß verwendeten Werkzeuge.

Unter dem Begriff "Infiltration" wird erfindungsgemäß das Einbringen von Matrixmaterial in Faserverbund-Halbzeuge verstanden. Insbesondere wird der Begriff "Infiltration" im folgenden für das erfindungsgemäß vorgesehene Einbringen des Matrixmaterials unter Anlegung von Unterdruck (Ansaugen) bzw. unter Anwendung von nur geringem Überdruck auf das Harzreservoir verwendet.

Die Figur zeigt als ein Ausführungsbeispiel der Erfindung eine Anordnung aus einem ersten 1 und einem zweiten 2 Fügeteil, die vorzugsweise aus Faserverbundmaterial gebildet sind, auf einer Auflage 11. Generell können die Fügeteile 1, 2 auch aus anderen festen Materialien, wie Stein, Holz, Kunststoff oder Metall gebildet sein. Zwischen den Fügeteilen oder an deren Auflageflächen ist eine Zwischenschicht 4 aus einem Faserverbund-Halbzeug angeordnet.

Unter dem Begriff "Faserverbund-Halbzeug" wird im erfindungsgemäßen Zusammenhang das Material oder die zu infiltrierende Zwischenschicht aus Verstärkungsfasern (z.B. Kohle-, Aramid-, Glasfasern) verstanden, aus dem nach einer Infiltration von Matrixmaterial und nach Aushärtung des Matrixmaterials eine die Fügeteile verbindende Faserverbund-Schicht herstellbar ist. Das Matrixmaterial stabilisiert die Zwischenschicht nach dessen Aushärtung und sorgt zusätzlich für die mechanische Anbindung der Zwischenschicht 4 an die einander zugewandten Auflageflächen der Fügeteile. Das Faserverbund-Halbzeug oder die Zwischenschicht 4 ist aufgebaut aus textilen Gebilden, die ausgebildet sind als Gewebe, Multiaxialgelege, Gestick, Gewirke, Geflecht und Strickware. Die textilen Gebilde können durch geeignete Verfahren wie Nähen und Kleben verbunden sein.

Um die Reproduzierbarkeit der mechanischen Festigkeit der Klebeverbindung gewährleisten zu können, ist der Faservolumengehalt von Bedeutung. Das in den Klebespalt, d.h. zwischen die Auflageflächen der Fügeteile 1, 2 einzubringende Textil aus Verstärkungsfasern muss dies gewährleisten. Problematisch wird dies dann, wenn sich kein konstantes Spaltmaß zwischen den beiden Fügeflächen der beiden Fügeteile einstellen lässt. In der Praxis ist diese Situation wesentlich wahrscheinlicher als die Idealbedingung eines konstanten Abstands der beiden Fügeteile. Das in die Zwischenschicht einzubringende Textil soll diesen Spalt vollständig ausfüllen, trotz der Variation der Spaltbreite, und sollte den Faservolumengehalt auch an den engsten Stellen nicht zu hoch werden lassen.

Gemäß der Erfindung wird ein Textil mit hoher Elastizität verwendet. Z.B. Strickware lässt sich stark dehnen und verringert dabei seine Dicke. Diesen Effekt aus der Querkontraktion des Textils wird ausgenützt, um an allen Orten der Fügefläche, angepasst an die örtliche Spaltdicke, die gewünschte Fasermenge einzustellen. Dazu wird das elastische Textil im Spalt einer Dehnung unterworfen und beim Zurückfedern füllt es genau den Platz aus, den die örtliche Spaltdicke ihm lässt. Auf diese Weise entsteht im Spalt eine annähernd konstante Faserdichte und damit reproduzierbare Verhältnisse.

Die Steigerung der Festigkeit der durch das erfindungsgemäße Verfahren entstehenden Klebeverbindung kann durch eine große Bruchzähigkeit der ausgehärteten Zwischenschicht verbessert werden. Dies kann dadurch bewirkt werden, dass dem Halbzeug oder textilen Gebilde Schmelzgarne beigemischt werden, die sich unter der Temperatur im Matrixmaterial auflösen und auf diese Weise als Weichmacher wirken.

Das Halbzeug oder das textile Gebilde aus Verstärkungsfasern, das zwischen den Fügeteilen 1, 2 gelegen ist, wird mittels der erfindungsgemäßen Flüssig-Infiltrationstechnik mit einem infiltrationsfähigen Matrixmaterial infiltriert. Die Infiltrationsfähigkeit ist an seine Viskosizitätseigenschaften gekoppelt, die ihrerseits den maximalen Infiltrationsweg bestimmt. Erfindungsgemäß werden vorzugsweise Epoxy-Harze als Matrixmaterial verwendet, jedoch können auch andere duroplastische Harze verwendet werden, z.B. Phenolharze, Bismaleimide, Polyesterharze oder niedrigviskose Kleber. Prinzipiell ist es auch möglich einen Matrixwerkstoff zu verwenden, der sich zusammen mit den beiden Fügeteilen keramisieren lässt.

An dem ersten und dem zweiten Fügeteil wird erfindungsgemäß ein erstes Werkzeug 6 mit einer Öffnung 12 zu einem Matrixmaterial-Angusskanal 12 angeordnet, so dass sich zwischen dem ersten und dem zweiten Fügeteil ein erster luftdichter Raum 21 für die Zufuhr vom Matrixmaterial ausbildet. Weiterhin wird an dem ersten und dem zweiten Fügeteil ein zweites Werkzeug 8 mit einer Öffnung 14 zu einem Absaugkanal angeordnet, so dass sich zwischen dem ersten und dem zweiten Fügeteil ein zweiter luftdichter Raum 22 mit einer Öffnung zu dem Absaugkanal 14 ausbildet, der mit einer Vakuumpumpe verbunden ist. Die Werkzeuge 6, 8 werden luftdicht an die Fügeteile 1, 2 angelegt, wobei Dichtmittel oder Dichtungen verwendet werden können. Der erste 21 und der zweite 22 Raum hat jeweils Zugang zu der Zwischenschicht 4.

Die Werkzeuge 6,8 werden beidseitig in Bezug auf die Ausrichtung der Fügeteile gegenüberliegend angeordnet. Die Werkszeuge 6,8 können, z.B. zur Vereinfachung der Handhabbarkeit, miteinander verbunden sein. Weiterhin können sie Stütz- und Positionierhilfe sein.

Der Matrixmaterial-Anguß oder die Zufuhr desselben erfolgt über das erste Werkzeug 6. Das Matrixmaterial gelangt über den Matrixmaterial-Angusskanal und die zugehörige Öffnung 12 in den ersten Raum 21 zur Zwischenschicht 4, um diese zu infiltrieren.

Über einen mit dem zweiten Raum 22 verbundenen Absaugekanal 14 und dessen Öffnung zum zweiten Raum 22 erfolgt die Herstellung von Unterdruck mittels einer Vakuumpumpe im Bereich zwischen dem ersten 1 und dem zweiten 2 Fügeteil.

Es kann im zweiten Raum 22 eine semipermeable Folie, die luftdurchlässig und Matrixmaterial-undurchlässig sein kann, angeordnet sein, um zu verhindern, dass Matrixmaterial in den Absaugekanal gelangen kann.

Anschließend erfolgt die Härtung der mit Matrixmaterial infiltrierten Zwischenschicht 4 unter Anwendung von Druck und Temperatur.

Für die Fügeteile 1, 2 können auch in Bezug auf die Darstellung in der Figur alternative Formen vorgesehen sein, die insbesondere aus den genannten Bestandteilen Grundfläche und Flansch in beliebigen Winkelanordnungen je nach dem Anwendungsfall gebildet sind. Die Fügeteile 1, 2 können aus jeweils einem oder mehreren Teilen gebildet sein.

### Bezugszeichen und Bezeichnungen:

- 1: erstes Fügeteil
- 2: zweites Fügeteil
- 4: Zwischenschicht,Textil aus Verstärkungsfasern
- 6: Angußwerkzeug
- 8: Absaugwerkzeug
- 10: VAP Membran
- 11: Auflage
- 12: Harzangußkanal
- 14: Absaugung
- 21: erster Raum
- 22: zweiter Raum

## Patentansprüche

1. Verfahren zum Verkleben von Bauteilen mit den Schritten:
- Anordnen eines ersten (1) und eines zweiten (2) Fügeteils aus Faserverbundmaterial auf einer Auflage (11), wobei an den Auflageflächen zwischen den Fügeteilen (1, 2) eine Zwischenschicht (4) aus einem Faserverbund-Halbzeug angeordnet wird,
- Anordnen eines ersten Werkzeuges (6) mit einem Matrixmaterial-Angusskanal (12) an dem ersten (1) und dem zweiten (2) Fügeteil, so dass sich zwischen dem ersten (1) und dem zweiten (2) Fügeteil ein erster luftdichter Raum (21) für die Zufuhr vom Matrixmaterial ausbildet,
- Anordnen eines zweiten Werkzeuges (8) mit einem Absaugkanal (14) an dem ersten (1) und dem zweiten (2) Fügeteil, so dass sich zwischen dem ersten (1) und dem zweiten (2) Fügeteil ein zweiter luftdichter Raum (22) mit einer Öffnung zu dem Absaugkanal (14) ausbildet, der mit einer Vakuumpumpe verbunden ist,
- Herstellung von Unterdruck im Bereich zwischen dem ersten (1) und dem zweiten (2) Fügeteil mittels der Vakuumpumpe,
- Zufuhr von Matrixmaterial zur Infiltration der Zwischenschicht (4) in den ersten Raum (21) über den Matrixmaterial-Angusskanal (12),
- Härtung der Zwischenschicht (4) unter Anwendung von Druck und Temperatur, **dadurch gekennzeichnet, dass** das Faserverbund-Halbzeug ein Textil hoher Elastizität, ausgebildet als Gewebe, Multiaxialgelege, Gestick, Gewirke, Geflecht oder Strickware, ist, das beim Einbringen in den Spalt zwischen dem ersten (1) und zweiten (2) Fügeteil einer Dehnung unterworfen wird, so dass es beim Zurückfedern den Raum ausfüllt, der durch die örtliche Spaltdicke festgelegt ist.

2. Verfahren zum Verkleben von Bauteilen nach dem Anspruch 1, **dadurch gekennzeichnet, dass** dem Faserhalbzeug der Zwischenschicht (4) Schmelzgarne beigemischt sind, die sich unter dem Einfluss von Temperatur im Matrixmaterial auflösen, um als Weichmacher zu wirken.

3. Verfahren zum Verkleben von Bauteilen nach einem der voranstehenden Ansprüche, **dadurch gekennzeichnet, dass** als Matrixmaterial duroplastische Harze oder keramische Matrixmaterialien verwendet werden.

4. Verfahren zum Verkleben von Bauteilen nach einem der voranstehenden Ansprüche, **dadurch gekennzeichnet, dass** die Werkzeuge (6, 8) mittels Dichtmitteln gegenüber den Fügeteilen abgedichtet sind.

5. Verfahren zum Verkleben von Bauteilen nach einem der voranstehenden Ansprüche, **dadurch gekennzeichnet, dass** die Werkzeuge (6, 8) an in Bezug auf die Position der Fügeteile gegenüberliegenden Seiten angeordnet sind.

6. Verfahren zum Verkleben von Bauteilen nach einem der Ansprüche 1 bis 4, **dadurch gekennzeichnet, dass** die Werkzeuge (6, 8) als ein Teil gebildet sind.

7. Verfahren zum Verkleben von Bauteilen nach einem der voranstehenden Ansprüche, **dadurch gekennzeichnet, dass** zusätzlich eine luftdurchlässige und Matrixmaterial-undurchlässige Membranfolie (10) zwischen der Zwischenschicht (4) und der Öffnung (14) zum Absaugkanal angeordnet wird.

## Claims

1. A method for gluing constructional elements with the steps:
- arrangement of a first joining part (1) and a second joining part (2) made from fibre-composite material on a support (11), with an intermediate layer (4) made from a fibre-composite semi-finished material being arranged on the supporting surfaces between the joining parts (1, 2),
- arrangement of a first mould (6) with a matrix-material sprue channel (12) on the first joining part (1) and the second joining part (2) so that a first air-tight space (21) for the supply of matrix material is formed between the first joining part (1) and the second joining part (2),
- arrangement of a second mould (8) with a suction channel (14) at the first joining part (1) and the second joining part (2) so that a second air-tight space (22) is formed between the first joining part (1) and the second joining part (2) with an opening to the suction channel (14) which is connected to a vacuum pump,
- production of low pressure in the region between the first joining part (1) and the second joining part (2) by means of the vacuum pump,
- supply of matrix material for infiltrating the intermediate layer (4) into the first space (21) by way of the matrix-material sprue channel (12),
- hardening of the intermediate layer (4) with application of pressure and temperature, **characterised in that** the fibre-composite semi-finished material is a textile of high elasticity, formed as a woven fabric, a multiaxial layered fabric, an embroidered fabric, a warp-knitted fabric, a braided fabric or a knitted product, that is subjected to extension upon introduction into the gap between the first joining part (1) and the second joining part (2) so that upon springing back it fills up the space fixed by the local gap thickness.

2. A method for gluing constructional elements according to claim 1, **characterised in that** admixed with the fibre semi-finished material of the intermediate layer (4) there are melting yarns which dissolve under the influence of temperature in the matrix material in order to act as softeners.

3. A method for gluing constructional elements according to one of the preceding claims, **characterised in that** thermosetting resins or ceramic matrix materials are used as the matrix material.

4. A method for gluing constructional elements according to one of the preceding claims, **characterised in that** the moulds (6, 8) are sealed by means of sealing means with respect to the joining parts.

5. A method for gluing constructional elements according to one of the preceding claims, **characterised in that** the moulds (6, 8) are arranged on opposite sides in relation to the position of the joining parts.

6. A method for gluing constructional elements according to one of claims 1 to 4, **characterised in that** the moulds (6, 8) are formed as one part.

7. A method for gluing constructional elements according to one of the preceding claims, **characterised in that** in addition a membrane film (10) that is permeable to air and impermeable to matrix material is arranged between the intermediate layer (4) and the opening (14) to the suction channel.

## Revendications

1. Procédé pour coller des éléments de construction comprenant les étapes suivantes :
- mise en place d'une première (1) et d'une seconde (2) pièce d'assemblage en une matière composite renforcée de fibres sur un support (11), avec mise en place d'une couche intermédiaire (4) en un produit semi-fini de matière composite renforcée de fibres sur les surfaces d'appui entre les pièces d'assemblage (1, 2),
- mise en place d'un premier outil (6) avec un canal de coulée (12) de la matière de la matrice sur la première (1) et la seconde (2) pièces d'assemblage de façon à réaliser entre la première (1) et la seconde (2) pièce d'assemblage, un premier volume (21) étanche à l'air pour l'alimentation de la matière de la matrice,
- mise en place d'un second outil (8) avec un canal d'aspiration (14) sur la première (1) et la seconde (2) pièce d'assemblage de façon à réaliser un second volume étanche à l'air (22) avec une ouverture vers le canal d'aspiration (14) relié à une pompe à vide,entre la première (1) et la seconde (2) pièce d'assemblage,
- développement d'une dépression dans la région entre la première (1) et la seconde (2) pièce d'assemblage à l'aide de la pompe à vide,
- fourniture de la matière de la matrice pour l'in-filtration de la couche intermédiaire (4) dans le premier volume (21) par le canal de coulée (12) de la matière de la matrice,
- prise de la couche intermédiaire (4) sous l'effet de la pression et de la température,
**caractérisé en ce que**
le produit semi-fini composite renforcé de fibres est un produit textile de forte élasticité, réalisé comme tissu, comme structure multicouches axiale, comme tricot, comme pièce tricotée, comme nappe non tissée ou comme produit de tricotage, et qui, introduit dans l'intervalle entre la première (1) et la seconde (2) pièce d'assemblage, est soumis à un allongement de façon que sous l'effet du mouvement élastique de retour, il remplit le volume fixé par l'épaisseur locale de l'intervalle.

2. Procédé de collage d'éléments de construction selon la revendication 1,
**caractérisé en ce qu'**
on ajoute par mélange, des fils fusibles au produit semi-fini de fibres de la couche intermédiaire (4), fils qui se dissolvent sous l'influence de la température dans la matière de la matrice pour fonctionner comme plastifiants.

3. Procédé de collage d'éléments de construction selon l'une des revendications précédentes,
**caractérisé en ce que**
comme matière de matrice, on utilise des résines thermodurcissables ou des matières céramiques de matrice.

4. Procédé de collage d'éléments de construction selon l'une des revendications précédentes,
**caractérisé en ce qu'**
on réalise l'étanchéité des outils (6, 8) par rapport aux pièces d'assemblage à l'aide d'agents d'étanchéité.

5. Procédé de collage d'éléments de construction selon l'une des revendications précédentes,
**caractérisé en ce que**
par rapport à la position des pièces d'assemblage, les outils (6, 8) sont prévus sur les côtés opposés.

6. Procédé de collage d'éléments de construction selon l'une des revendications 1 à 4,
**caractérisé en ce que**
les outils (6, 8) sont formés comme une pièce.

7. Procédé de collage d'éléments de construction selon l'une des revendications précédentes,
**caractérisé en ce qu'**
en plus on a, entre la couche intermédiaire (4) et l'ouverture (14) vers le canal d'aspiration, un film en membrane (10) perméable à l'air et imperméable à la matière de la matrice.
